**Europäisches Patentamt**

**European Patent Office**

**Office européen des brevets**

(19)

(11) Veröffentlichungsnummer : **0 379 840 B1**

## (12) EUROPÄISCHE PATENTSCHRIFT

(45) Veröffentlichungstag der Patentschrift :
15.09.93 Patentblatt 93/37

(51) Int. Cl.$^5$: **G01L 21/22,** G01L 19/04

(21) Anmeldenummer : **89810927.7**

(22) Anmeldetag : **08.12.89**

(54) **Stimmgabel-Quarz-Manometer.**

(30) Priorität : **23.01.89 CH 205/89**

(43) Veröffentlichungstag der Anmeldung :
**01.08.90 Patentblatt 90/31**

(45) Bekanntmachung des Hinweises auf die
Patenterteilung :
**15.09.93 Patentblatt 93/37**

(84) Benannte Vertragsstaaten :
**AT BE CH DE ES FR GB IT LI LU NL SE**

(56) Entgegenhaltungen :
**EP-A- 0 101 669**
**EP-A- 0 233 054**
**EP-A- 0 273 649**

(73) Patentinhaber : **BALZERS**
**AKTIENGESELLSCHAFT**
**FL-9496 Balzers (LI)**

(72) Erfinder : **Stocker, Rudolf, Dr.**
**Langacker**
**CH-9478 Azmoos (CH)**

(74) Vertreter : **Frei, Alexandra Sarah**
**Frei Patentanwaltsbüro Hedwigsteig 6**
**Postfach 95**
**CH-8029 Zürich (CH)**

## Beschreibung

Die vorliegende Erfindung liegt auf dem Gebiet der Messtechnik und betrifft ein Verfahren zur Druckmessung mittels Stimmgabelquarz-Manometer gemäss dem Oberbegriff des unabhängigen Patentanspruchs 1 sowie eine Vorrichtung zur Durchführung dieses Verfahrens gemäss dem Oberbegriff des Patentanspruchs 6.

Die Verwendung von Stimmgabelquarz-Schwingern - wie sie z.B. in Quarzuhren eingesetzt werden - zur Druckmessung im Vakuum-Bereich ist grundsätzlich bekannt. Dabei sind zwei *indirekte* Messmethoden zur Anwendung gelangt:

Bei der ersten Methode wird die Tatsache benutzt, dass die *Resonanzfrequenz* eines Stimmgabelquarzes vom Umgebungsdruck abhängig ist (K. Kokubun et al.: "Frequency dependence of quartz oscillators on gas pressure", in J. Vac. Sci. Technol. A 3 (6), Nov/Dec 1985, 2184ff.). Diese Messmethode versagt jedoch bereits unterhalb einer Druckgrenze von ca. $10^4$ Pa, denn unter diesem Wert verändert sich die Resonanzfrequenz nur noch in einem so kleinen Ausmass, dass eine brauchbare Auswertung nicht mehr möglich ist, weshalb denn diese Methode in der Praxis auch nicht mehr weiter verfolgt worden ist.

Die zweite Methode, welche heute verschiedentlich eingesetzt wird, basiert auf der Druckabhängigkeit der *Dämpfung*, d.h. der druckvariablen Güte des Schwingkreises des Quarzes, welche z.B. durch Messung des Seriewiderstandes bei Resonanzfrequenz ausgewertet wird (K. Kokubun et al.: "Unified formula describing the impedance dependence of a quartz oscillator on gas pressure", in 1. Vac. Sci. Technol. A 5 (4), Jul/Aug 1987, 245off.; EP-O-180-297-A2; EP-O-233-054-A2). Dadurch wird ein brauchbarer Messbereich von ca. 1 - $10^5$ Pa und eine relative Messgenauigkeit von ca. 10 % erreicht.

Als wesentlicher Nachteil von solchen Stimmgabelquarz-Manometern erweist sich jedoch die Tatsache, dass sowohl die Resonanzfrequenz als auch der Seriewiderstand nicht nur vom Druck, sondern zudem von einer Vielzahl weiterer Einflüsse abhängen. Nebst mechanischem, elektrischem und thermodynamischem Aufbau des Manometers (vgl. hiezu die Lösung in der Patentanmeldung derselben Anmelderin mit demselben Anmeldedatum) sowie der Gasart im Messvolumen (vgl. eine zweite Patentanmeldung derselben Anmelderin mit demselben Anmeldedatum), üben insbesondere Verschmutzungen der Quarz-Oberfläche einen wesentlichen Einfluss auf das Messverhalten aus.

Solche Verschmutzungen des Messorgans - wie sie bei praktisch allen indirekt messenden Vakuummetern (z.B. Pirani- und Ionisationsmanometer) auftreten - sind vor allem durch Anlagerungen von Oeldampf der Vakuumpumpe auf der Quarz-Oberfläche, aber natürlich auch durch sonstige Einflüsse bedingt. Obwohl dem zwar prinzipiell durch Reinigen oder Auswechseln des Quarzes begegnet werden kann, ist dieses Problem gravierend, denn es besteht bis jetzt keine Möglichkeit, den aktuellen Grad der Verschmutzung festzustellen oder deren Auswirkungen messtechnisch zu kompensieren. Bei Manometern, welche auf Messung der Güteänderung basieren, manifestiert sich eine solche Verschmutzung zwar lediglich durch eine schleichende Verfälschung der Messresultate. Dies führt jedoch vor allem bei längeren Messreihen, bei welchen ein Reinigen oder Auswechseln des Quarzes gerade aus Gründen der Messkonstanz nicht in Frage kommt, zu erheblichen Unsicherheiten.

Es ist deshalb Aufgabe der vorliegenden Erfindung, ein Verfahren zur Druckmessung mittels Stimmgabelquarz-Manometer und eine entsprechende Vorrichtung zu schaffen, welche weitgehend verschmutzungsunabhängige Messresultate liefern. Diese Aufgabe wird durch die kennzeichnenden Merkmale der beiden unabhängigen Ansprüche gelöst.

Die Erfindung basiert auf der Erkenntnis, dass die Dämpfung und die Resonanzfrequenz eines Stimmgabelquarzes sowohl vom Druck als auch von der Verschmutzung abhängig sind, dass aber überraschenderweise der Einfluss des Druckes sich bei der Dämpfung in bedeutend grösserem Ausmass manifestiert als die Verschmutzung, während die Resonanzfrequenz ihrerseits stark von der Verschmutzung, aber - wie vorangehend erwähnt - nur in geringem Ausmass vom Druck abhängig ist.

Der Vorteil der vorgeschlagenen Erfindung besteht zunächst darin, dass die gleichzeitig vorhandenen Einflüsse von Druck und Verschmutzung getrennt werden können, weshalb eine stetige Überwachung und/oder Kompensation der durch Oberflächenverschmutzungen bedingten Veränderungen des Schwingverhaltens des Stimmgabelquarzes ermöglicht wird. Dadurch wird ein verschmutzungsunabhängiges Stimmgabelquarz-Manometer realisierbar, welches bezüglich Messgenauigkeit und Wartungsfreundlichkeit herkömmlichen Stimmgabelquarz-Manometern oder den etwa im selben Bereich arbeitenden Pirani-Manometern deutlich überlegen ist. Eine bevorzugte Ausführung der Erfindung ermöglicht zudem, korrosive Einflüsse, welchen selbst mit periodischer Reinigung nicht beizukommen wäre, zu detektieren und entsprechend zu kompensieren.

Im folgenden werden das Verfahren und eine bevorzugte Ausführungsform der Erfindung anhand einiger beispielhafter Zeichnungen näher erläutert. Dabei zeigt:

Fig. 1 eine typische Resonanzfrequenz/Druck-Abhängigkeitskurve;

Fig. 2    eine typische Seriewiderstand/Druck-Abhängigkeitskurve;

Fig. 3    eine mögliche Ausführung eines Stimmgabelquarz-Manometers;

Fig. 4    eine bevorzugte Ausführung eines erfindungsgemässen Stimmgabelquarz-Manometers;

Fig. 5    ein Blockschema zur Veranschaulichung einer vorrichtungsmässigen Realisierung des erfindungsgemässen Messverfahrens; und

Fig. 6    eine mögliche Schaltungsanordnung zur Realisierung des erfindungsgemässen Messverfahrens.

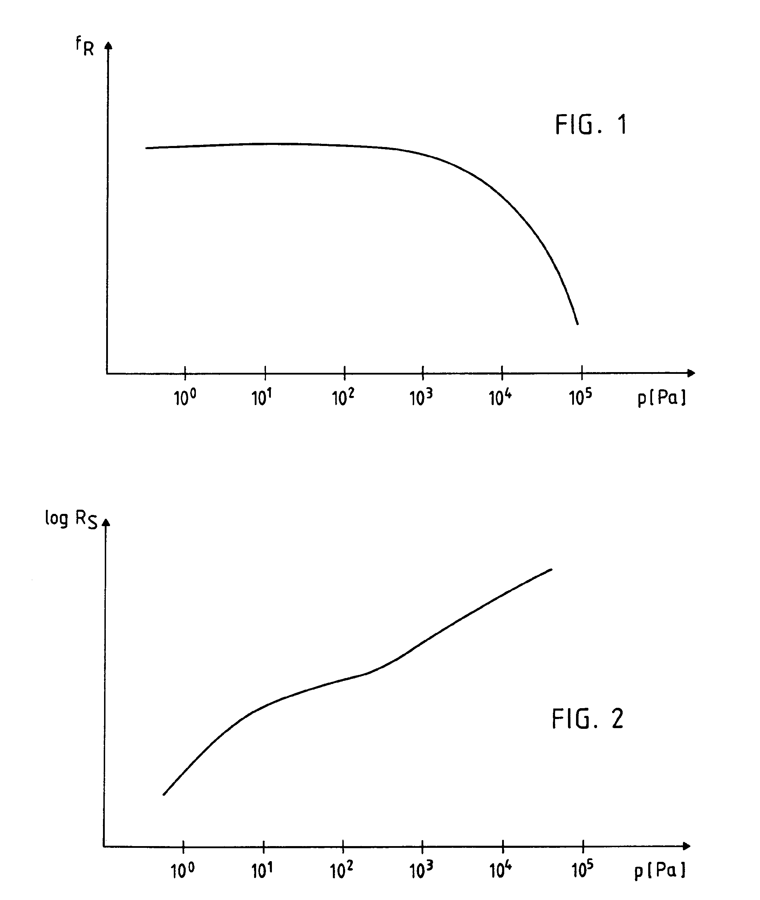

Figur 1 stellt den qualitativen Verlauf der Resonanzfrequenz $f_R$ eines Stimmgabelquarzes in Abhängigkeit vom Druck p dar. Figur 2 zeigt den entsprechenden Verlauf des Seriewiderstandes $R_S$, welcher als Mass für die Schwingungsdämpfung des Quarzes dient. Die Darstellungen beschränken sich dabei auf den heute sinnvoll nutzbaren Druckbereich von Stimmgabelquarz-Manometern zwischen etwa $10^0$-$10^5$ Pa. Während die Re-sonanzfrequenz unterhalb von etwa $10^4$ - $10^3$ Pa im wesentlichen konstant bleibt, zeigt der Seriewiderstand einen quasilogarithmischen Verlauf über den gesamten Druckbereich. Damit ist - wie bereits eingangs erwähnt - ersichtlich, dass eine Druckmessung via Resonanzfrequenz relativ rasch an physikalische Grenzen stösst, wohingegen eine Auswertung des Seriewiderstandes heutzutage über etwa 5 Dekaden hinweg möglich ist. Die eingezeichneten Kurven sind dabei rein qualitativ zu verstehen und können im konkreten Einzelfall je nach den Umständen (Temperatur, Gasart, etc.) leicht unterschiedliche Ausprägungen aufweisen.

Durch Verschmutzung der Quarzoberfläche (Ablagerungen) vergrössert sich die Masse des Quarzes, wodurch sich sein Schwingverhalten ändert. Qualitativ nimmt die Güte des Schwingkreises ab, d.h. die dazu reziproke Dämpfung (z.B. Seriewiderstand) nimmt entsprechend zu, während die Resonanzfrequenz abnimmt. Dadurch wird natürlich die Messgenauigkeit eines Stimmgabelquarz-Manometers beeinträchtigt. Obwohl sich gezeigt hat, dass die Verschmutzung den Seriewiderstand nur in einem relativ geringen Masse beeinflusst, sind solche Veränderungen der Messcharakteristik natürlich unerwünscht. Insbesondere bei längerdauernden Messreihen führt dies zu einer zunehmenden Verfälschung der Messresultate.

Überraschenderweise hat sich nun erwiesen, dass die Resonanzfrequenz, welche ja nur wenig druckvariabel ist, in einem bedeutenden Ausmass von der Verschmutzung abhängt. Da die Druckmessung via Resonanzfrequenz nicht ergiebig ist, wurde dieser Tatsache bis anhin keine Beachtung geschenkt. Die Erfindung besteht nun darin, das bekanntermassen zur Druckbestimmung geeignete Dämpfungssignal (Seriewiderstand) durch einen mittels Messung der Resonanzfrequenz bestimmten Verschmutzungskoëffizienten zu korrigieren. Zum besseren Verständnis werden nachfolgend einige mathematische Betrachtungen angestellt. Diese gelten im wesentlichen für den Druckbereich $p < 10^3$ Pa, was jedoch völlig genügend ist, da der Einfluss der Verschmutzung auf die Dämpfung bei höheren Drücken vernachlässigbar klein ist und in der Regel nicht kompensiert werden muss.

Für den Seriewiderstand $R_S$ als Mass für die Dämpfung des Quarzschwingkreises kann geschrieben wer-den:

$$R_S = R_0 + R \quad (1)$$
$$R = \alpha p + \beta m \quad (2)$$

Dabei wird mit m die durch Verschmutzung auf die Stimmgabel aufgebrachte Masse, mit p der Druck und mit $R_0$ der Restwiderstand bei p = 0 und m = 0 bezeichnet. $\alpha$ und $\beta$ sind positive Koëffizienten.

Für die Serieresonanz-Frequenz $f_R$ des Quarzes gilt:

$$f_R = f_0 - f \quad (3)$$
$$f = \gamma p + \delta m \quad (4)$$

Dabei ist $f_0$ die Resonanzfrequenz bei p = 0 und m = 0. Wiederum sind $\gamma$ und $\delta$ positive Koëffizienten.

Die Auflösung der vorangehenden Gleichungen (1) bis (4) nach dem Druck p ergibt:

$$p = \frac{(R/\alpha) - (\beta\gamma/\alpha\delta)\cdot(f/\gamma)}{1 - (\beta\gamma/\alpha\delta)} \quad (5)$$

Eine experimentelle Bestimmung der genannten Koëffizienten bei üblichen Schwingquarzen im 32 kHz-Bereich ergibt folgende typische Werte:

$$\alpha \approx 5\cdot10^2 \ \Omega/Pa$$
$$\gamma \approx 10^{-4} \ Hz/Pa$$
$$(\alpha\delta/\beta\gamma) \approx 5000$$

Physikalisch ist der Wert $(\alpha\delta/\beta\gamma)$ eigentlich ein Mass für die unterschiedliche Verschmutzungsempfindlichkeit der beiden Druckmessmethoden: Die Druckmessung mittels Messung der Resonanzfrequenz reagiert auf Verschmutzung etwa um den Faktor 5000 empfindlicher als die Messung des Druckes mittels Messung der Dämpfung (Seriewiderstand).

In Anbetracht dieser Zahlenwerte kann der Nenner auf der rechten Seite von Gleichung (5) gleich 1 gesetzt werden:

$$p = (1/\alpha)\cdot(R - [\beta/\delta]\cdot f) \quad (6)$$

Mit den oben angegebenen Zahlenwerten ergibt dies:

$$p = (2 \cdot 10^{-3} \, \text{Pa}/\Omega \cdot R) - (2 \, \text{Pa/Hz} \cdot f) \quad (7)$$

Die Grössen $R_0$ und $f_0$ werden durch vorgängige Eichung oder Nullabgleich bestimmt bzw. berücksichtigt. Dadurch können in den Gleichungen (6) und (7) die Werte R bzw. f durch ($R_S$-$R_0$) bzw. ($f_R$-$f_0$) substituiert werden. Damit folgt aus Gleichung (6):

$$p = (1/\alpha) \cdot (R_S - [\beta/\delta] \cdot f_R) - \{(1/\alpha) \cdot (R_0 - [\beta/\delta] \cdot f_0)\} \quad (8)$$

oder:

$$p = (1/\alpha) \cdot (R_s - [\beta/\delta] \cdot f_R) + K_1 \quad (9)$$

Die Gleichungen (8) und (9) zeigen, wie durch Auswertung der beiden verfügbaren Ausgangssignale des Schwingquarzes, d.h. $R_S$ und $f_S$ der effektive Druck erfindungsgemäss verschmutzungsunabhängig gemessen werden kann. $K_1$ ist dabei eine reine Konstante, welche durch Eichung einer entsprechenden Messschaltung berücksichtigt werden kann.

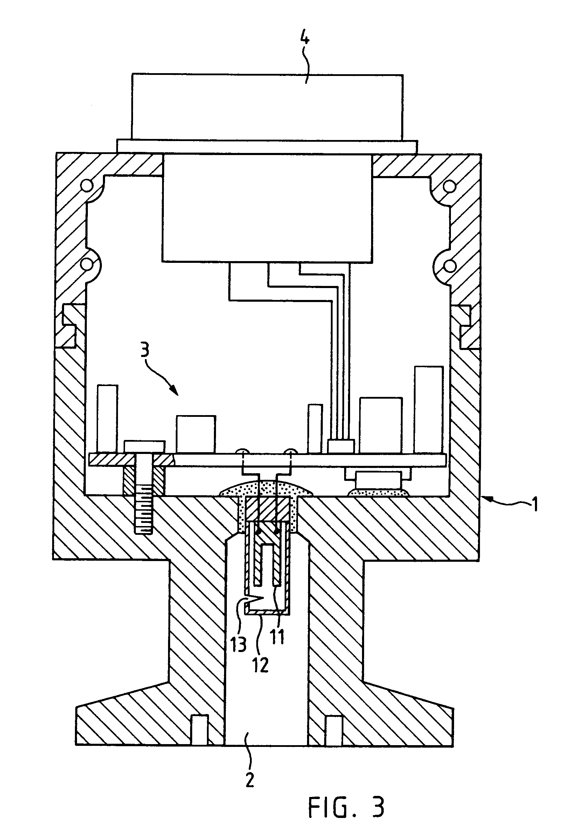

In Figur 3 ist eine mögliche Messvorrichtung, zur Durchführung des erfindungsgemässen Verfahrens dargestellt. Die Vorrichtung besteht aus einem Gehäuse 1, welches mit einem nicht dargestellten Messvolumen verbunden werden kann. Das Gehäuse weist eine gegen das Messvolumen geöffnete Bohrung 2 auf, in welcher ein handelsüblicher Uhrenquarz 11 untergebracht ist. Der Quarz 11 ist von einer Schutzhülle 12 umgeben, welche eine seitliche Öffnung 13 aufweist, so dass der Quarz mit dem Messvolumen druckmässig in Verbindung steht. Das Gehäuse 1 enthält zudem eine elektronische Schaltung 3 zum Betrieb des Quarzes und zur Auswertung der Ausgangssignale desselben. Eine Stimmgabelquarz-Messonde, die im Hinblick auf das erfindungsgemässe Verfahren dank deren weitgehender Vermeidung von mechanischen und thermischen Störeffekten besonders geeignet ist, ist in der bereits eingangs erwähnten Anmeldung derselben Anmelderin (mit demselben Anmeldedatum) beschrieben.

Einerseits ist nun eine vorrichtungsmässige Realisierung der Gleichung (9) dadurch möglich, dass diese Funktion schaltungsmässig (analog oder digital) realisiert wird (vgl. die nachstehenden Ausführungen) oder dass die Funktion als Programm in einem z.B. in die Schaltung 3 integrierten Mikroprozessor gespeichert ist. Durch vorgängige Eichung werden die Konstanten gemäss Gleichung (9) bestimmt und entweder hard- bzw. softwaremässig eingestellt oder die Anzeige wird durch einen Nullabgleich bei Hochvakuum (d.h. bei einem unter der Empfindlichkeit des Manometers liegenden Druckwert) auf $p = 0$ abgeglichen. In beiden Fällen (selbstverständlich ist auch eine Kombination von hard- und softwaremässigen Lösungen möglich) kann das erfindungsgemäss von Verschmutzungseinflüssen bereinigte Messresultat über einen Stecker 4 einer Anzeigeeinheit zugeführt oder/und zu weiterer Verarbeitung einem Rechner übermittelt werden.

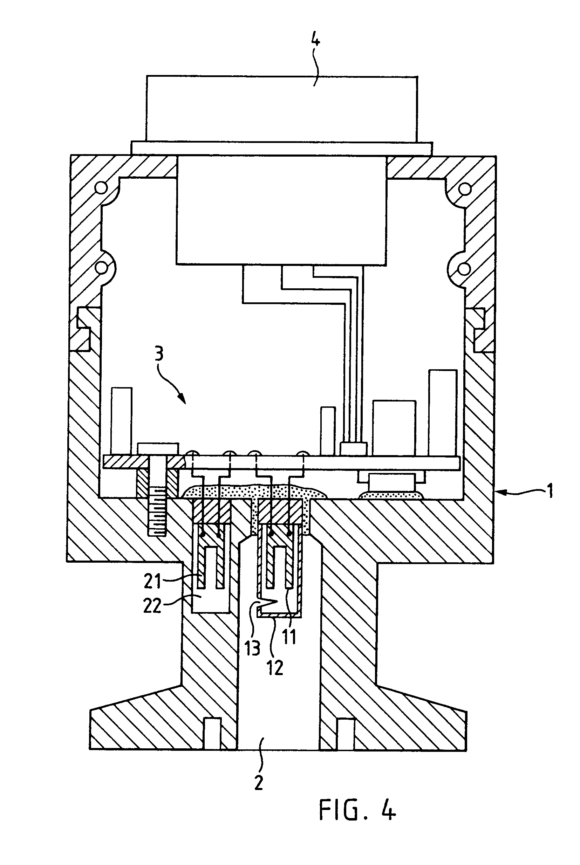

Nachfolgend soll nun auf eine bevorzugte Ausführung der Erfindung näher eingegangen werden. Bei dem in Figur 4 dargestellten Stimmgabelquarz-Manometer werden dieselben Referenznummern verwendet, wie bei demjenigen von Figur 3. Zusätzlich weist das Manometer von Figur 4 jedoch einen zweiten Schwingquarz 21 auf, welcher in einer verschlossenen Bohrung 22 des Gehäuses 1 untergebracht, auf konstantem Druck gehalten und elektrisch ebenfalls mit der Schaltung 3 verbunden ist. Da der Druck in der Bohrung 22 natürlich ebenfalls temperaturabhängig ist, wird die Bohrung vorzugsweise so weit evakuiert, dass der verbleibende Druck unterhalb der Ansprechgrenze des Stimmgabelquarzes liegt. In der Praxis genügt es, wenn der Druck unter ca. $10^1$ Pa liegt.

Der Vorteil einer solchen Ausführung besteht im wesentlichen darin, dass durch geeignete Verknüpfung der Ausgangssignale des eigentlichen Messquarzes 11 mit denjenigen des Referenzquarzes 21 eine weitgehende Kompensation der Temperaturabhängigkeit der Resonanzfrequenz realisiert werden kann. In der obigen Gleichung (9), in welcher bei der Druckmessung mittels Messung des Seriewiderstandes der Einfluss der Verschmutzung durch den Term $\beta/\delta \cdot f_R$ korrigiert wird, wird nämlich die Tatsache vernachlässigt, dass die Resonanzfrequenz $f_R$ nicht nur von der Verschmutzung, sondern auch von der Temperatur abhängig ist. Durch Verwendung eines Referenzquarzes 21, welcher einerseits dieselbe Temperaturcharakteristik aufweist, wie der Messquarz 11, andererseits jedoch im Raum 22 eingeschlossen und damit keinen Verschmutzungen ausgesetzt ist, wird eine temperaturunabhängige Verschmutzungskompensation erreicht. Dies soll anhand der nachstehenden mathematischen Überlegungen dargelegt werden. Dabei soll mit $f_R$ wie bis anhin die verschmutzungs- und temperaturabhängige Resonanzfrequenz des Messquarzes 11, mit $f_R$' die verschmutzungs*un*abhängige und in gleichem Masse temperaturabhängige Resonanzfrequenz des Referenzquarzes 21 bezeichnet werden. Der Korrekturterm der Gleichung (9) lässt sich damit umformulieren:

$$\beta/\delta \cdot f_R = \beta/\delta \cdot (f_R - f_R') + \beta/\delta \cdot f_R' \quad (10)$$

Da $f_R$ und $f_R$' dieselbe Temperaturcharakteristik aufweisen, ist ihre Differenz temperaturunabhängig, also einzig von der Verschmutzung beeinflusst. Durch Eichung bei einer gegebenen Temperatur lässt sich der Term $\beta/\delta \cdot f_R$' in eine Konstante überführen, so dass Gleichung (9) neu geschrieben werden kann:

$$p = 1/\alpha \cdot (R_S + \beta/\delta \cdot [f_R' - f_R]) + K_2 \quad (11)$$

Dabei ist $K_2$ eine reine Konstante, welche wiederum durch Eichung der entsprechenden Messschaltung eliminiert oder softwaremässig berücksichtigt werden kann.

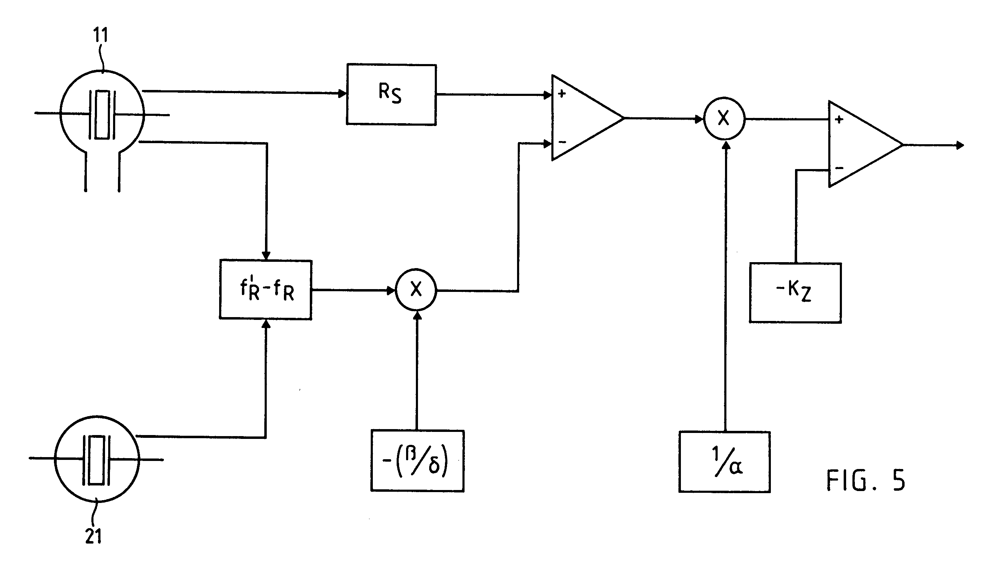

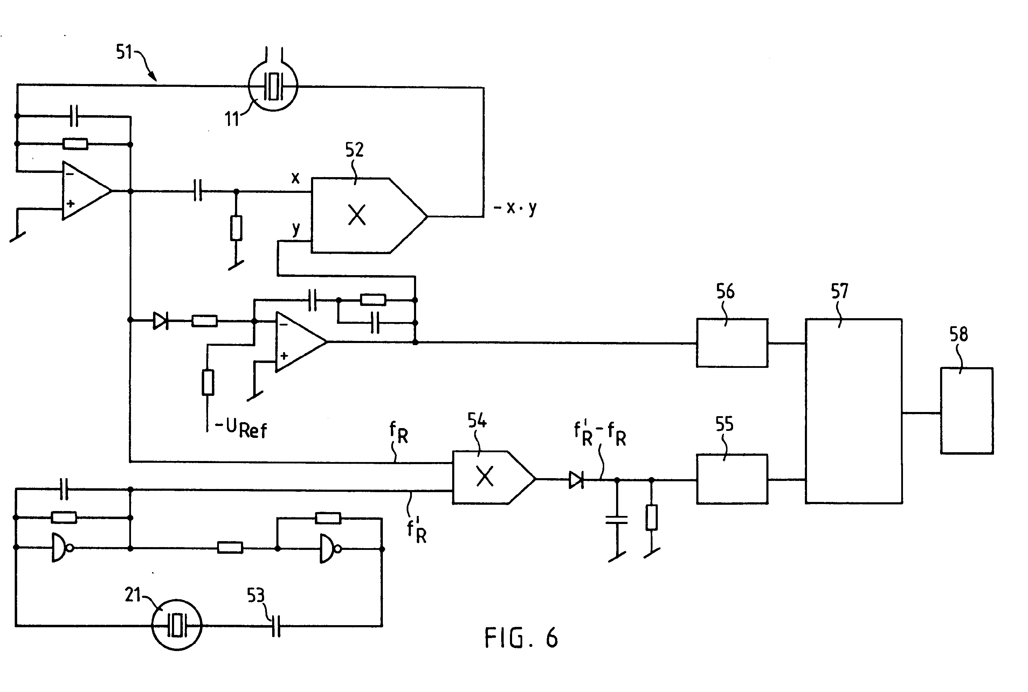

Zur Ergänzung zeigt Figur 5 ein Blockschaltbild der in Gleichung (11) dargestellten Druckfunktion. Eine konkrete Realisierung dieser Funktion, welche sowohl hard- als auch softwaremässig erfolgen kann, wird in Figur 6 dargestellt. Der Messquarz 11 ist dabei vorzugsweise in einer selbstschwingenden Regelschaltung 51 angeordnet, wobei z.B. mittels eines Multiplikators 52 für eine konstante Schwingungsamplitude gesorgt wird. Der zur Aufrechterhaltung dieser Schwingungsamplitude erforderliche Regelfaktor - in der Schaltung in allgemeiner Form mit y bezeichnet - ist ein Mass für die Dämpfung bzw. die Güte des Schwingkreises. Durch einen in Serie zum Referenzquarz 21 geschalteten Kondensator 53 wird die Resonanzfrequenz $f_R'$ des Referenzquarzes 21 um einige Hertz höher abgeglichen, so dass sichergestellt ist, dass die in einem Modulator 54 gebildete Differenz ($f_R'$ - $f_R$) immer positiv ist. Diese Frequenzdifferenz wird in einem Frequenzmesser 55 bestimmt und ebenso wie das in einem A/D-Wandler 56 digitalisierte Regelsignal y einem nachgeschalteten Rechner 57 zugeführt. Das im Rechner 57 erfindungsgemäss bestimmte Messresultat wird anschliessend einer Anzeigeeinheit 58 übermittelt.

Selbstverständlich besteht die Möglichkeit, anstatt bzw. zusätzlich zu einer direkten Kompensation der Verschmutzung, eine reine Detektion und Anzeige der Verschmutzung vorzusehen, denn die Differenz der beiden Resonanzfrequenzen ($f_R'$ - $f_R$) stellt ein qualitatives Mass für die Verschmutzung dar. Wird in einer einfachen Ausführung auf eine direkte Verschmutzungskompensation verzichtet, so kann eine Verschmutzungsanzeige beispielsweise so ausgelegt werden, dass sie ein Warnsignal (akustisch/optisch) erzeugt, wenn die Verschmutzung ein gewisses vorbestimmtes Mass übersteigt, wodurch angezeigt wird, wann der Quarz gereinigt oder ausgewechselt werden muss.

Ein weiteres bis anhin ungelöstes Problem von Stimmgabelquarz-Manometern besteht darin, dass die Schwingcharakteristik des Quarzes nicht nur durch Verschmutzung, sondern auch durch korrosive Einflüsse von Gasen im Messvolumen verändert wird. Insbesondere können die feinen aufgedampften Elektroden des Quarzes korrodiert werden, was zu einer Veränderung der Schwingcharakteristik und damit zu zunehmender Ungenauigkeit der Messresultate führt. Durch Vergleich der Ausgangssignale des Messquarzes 11 mit denjenigen des Referenzquarzes 21, welch lezterer den korrosiven Gasen nicht ausgesetzt ist, kann ein Manometer der vorangehend beschriebenen Art zusätzlich auf Korrosion überwacht werden. Ergibt ein Vergleich dieser Ausgangssignale, dass ein vorgegebener und allenfalls einstellbarer Toleranzwert überschritten ist, so kann wiederum angezeigt werden, dass die Korrosion ein Mass erreicht hat, welches ein Auswechseln des Quarzes erfordert.

Generell lässt sich das erfindungsgemässe Verfahren, d.h. die Kombination des Dämpfungs- und des Frequenzsignals, zur Kompensation sämtlicher Effekte einsetzen, welche Verfälschungen der Messresultate bewirken, bei denen einer Zunahme (allenfalls auch Abnahme) der Dämpfung eine weitgehende Invarianz der Resonanzfrequenz gegenübersteht. Zu denken wäre hier unter anderem an Störeffekte, welche durch Wasserdampf im Messvolumen verursacht werden.

Der Vollständigkeit halber ist anzumerken, dass das erfindungsgemässe Messverfahren offensichtlich nicht nur anwendbar ist, wenn die Güte, bzw. die dazu reziproke Schwingungsdämpfung des Quarzes mittels Messung des Seriewiderstandes bestimmt wird. Da der Seriewiderstand lediglich ein bevorzugtes Mass für die Dämpfung darstellt, welche ihrerseits auch auf anderem Wege (z.B. über die zur Aufrechterhaltung der Resonanz erforderliche Spannung bzw. den entsprechenden Strom, Messung der Breite der Resonanzkurve, Bestimmung der Ausklingkonstanten der Schwingung, etc.) bestimmt werden kann, ist das erfindungsgemässe Verfahren selbstverständlich analog bei sämtlichen Druckmessungsmethoden mittels Güte- bzw. Dämpfungsmessung anwendbar.

Natürlich ist das erfindungsgemässe Messverfahren ebensowenig auf den hier diskutierten Druckbereich limitiert. Dieser stellt lediglich den heute bei Stimmgabelquarzen üblichen Bereich dar, wobei durchaus vorstellbar ist, dass in der Zukunft Quarze mit grösserem Messbereich verfügbar sein werden.


**Patentansprüche**

1. Verfahren zur Druckmessung mit einem bei Resonanzfrequenz betriebenen Stimmgabelquarz, bei dem der Druck (p) eines Messvolumens durch Messung eines der Schwingungsdämpfung des Quarzes entsprechenden Dämpfungswertes bestimmt wird, **dadurch gekennzeichnet**, dass der Dämpfungswert mit einem zur jeweiligen Resonanzfrequenz ($f_R$) proportionalen Korrekturwert verknüpft wird.

2. Verfahren nach Anspruch 1, **dadurch gekennzeichnet**, dass der Dämpfungswert derart mit dem Korrekturwert verknüpft wird, dass der Druckmesswert in wesentlichen unabhängig von Veränderungen der Masse des Stimmgabelquarzes bestimmt wird.

**3.** Verfahren nach einem der vorangehenden Ansprüche, **dadurch gekennzeichnet**, dass die Bestimmung des Dämpfungswertes mittels Messung des Seriewiderstandes ($R_S$) des Stimmgabelquarzes erfolgt.

**4.** Verfahren nach einem der vorangehenden Ansprüche, **dadurch gekennzeichnet**, dass die Resonanzfrequenz ($f_R'$) eines zweiten, mit dem Messvolumen nicht in Verbindung stehenden und auf konstantem Druck gehaltenen Stimmgabelquarzes (21) bestimmt wird, wobei dessen Frequenzgang im wesentlichen dieselbe Temperaturcharakteristik aufweist wie derjenige des ersten Stimmgabelquarzes (11) und dass der Dämpfungswert mit einem zur jeweiligen Differenz zwischen den Resonanzfrequenzen ($f_R$, $f_R'$) proportionalen Wert verknüpft wird.

**5.** Verfahren nach Anspruch 4, **dadurch gekennzeichnet**, dass der zweite Schwingquarz (21) auf einem konstanten Druck gehalten wird, welcher unterhalb der Ansprechgrenze des Stimmgabelquarz-Manometers liegt.

**6.** Verfahren nach Anspruch 4 oder 5, **dadurch gekennzeichnet**, dass der zweite Stimmgabelquarz (21) so abgestimmt wird, dass seine Resonanzfrequenz ($f_R'$) bei gleichen Bedingungen höher ist als diejenige ($f_R$) des ersten Stimmgabelquarzes (11).

**7.** Vorrichtung zur Durchführung des Verfahrens zur Druckmessung nach Anspruch 1 mit einem druckmässig mit dem Messvolumen verbundenen Stimmgabelquarz (11) und einer elektronischen Schaltung (3) zur Erfassung und Auswertung eines dämpfungsabhängigen Ausgangssignals ($R_S$) sowie der jeweiligen Resonanzfrequenz ($f_R$) des Stimmgabelquarzes (11).

**8.** Vorrichtung nach Anspruch 7, **dadurch gekennzeichnet**, dass der Stimmgabelquarz (11) in einer selbstschwingenden Regelschaltung (51) angeordnet ist.

**9.** Vorrichtung nach einem der Ansprüche 7 oder 8, **dadurch gekennzeichnet**, dass in einem geschlossenen, druckkonstanten Raum (22) ein zweiter Stimmgabelquarz (21) angeordnet ist, dessen Frequenzgang im wesentlichen dieselbe Temperaturabhängigkeit wie derjenige des ersten Stimmgabelquarzes (11) aufweist und dass die beiden Quarze (11, 21) so angeordnet sind, dass sie im wesentlichen gleichen Temperaturen ausgesetzt sind.

**10.** Vorrichtung nach Anspruch 9, **dadurch gekennzeichnet**, dass der Schwingkreis des zweiten Stimmgabelquarzes (21) einen in Serie geschalteten Kondensator (53) aufweist.

**11.** Vorrichtung nach einem der Ansprüche 7 bis 10, **dadurch gekennzeichnet**, dass zur Verarbeitung der Messresultate ein Rechner (57) vorgesehen ist.

## Claims

**1.** Process for measuring the pressure with a tuning fork quartz operated at resonant frequency, in which the pressure (p) of a measuring volume is determined by measuring a damping value corresponding to the oscillation damping of the quartz, characterized in that the damping value is combined with a correction value proportional to the resonant frequency ($f_R$).

**2.** Process according to claim 1, characterized in that the damping value is combined with the correction value in such a way that the measured pressure value is determined substantially independently of changes of the mass of the tuning fork quartz.

**3.** Process according to one of the preceding claims, characterized in that the damping value is determined by measuring the series resistance ($R_S$) of the tuning fork quartz.

**4.** Process according to one of the preceding claims, characterized in that the resonant frequency ($f_R'$) of a second tuning fork quartz (21) not connected to the measuring volume and kept at constant pressure is determined, its frequency response substantially having the same temperature characteristic as that of the first tuning fork quartz (11) and that the damping value is combined with a value proportional to the difference between the resonant frequencies ($f_R$, $f_R'$).

**5.** Process according to claim 4, characterized in that the second oscillating quartz (21) is kept at a constant pressure, which is below the response limit of the tuning fork quartz manometer.

6. Process according to claims 4 or 5, characterized in that the second tuning fork quartz (21) is so tuned that its resonant frequency ($f_R$') under the same conditions is higher than that ($f_R$) of the first tuning fork quartz (11).

7. Apparatus for performing the process for measuring the pressure according to claim 1 with a tuning fork quartz (11) pressure connected to the measuring volume and an electronic circuit (3) for determining and evaluating a damping-dependent output signal ($R_S$) and the resonant frequency ($f_R$) of the tuning fork quartz (11).

8. Apparatus according to claim 7, characterized in that the tuning fork quartz (11) is arranged in a self-oscillating control loop (51).

9. Apparatus according to one of the claims 7 or 8, characterized in that in a closed, pressure-constant area (22) is positioned a second tuning fork quartz (21), whose frequency response has substantially the same temperature dependence as that of the first tuning fork quartz (11) and that the two quartzes (11 and 21) are so arranged that they are essentially exposed to the same temperatures.

10. Apparatus according to claim 9, characterized in that the oscillating circuit of the second tuning fork quartz (21) has a series-connected capacitor (53).

11. Apparatus according to one of the claims 7 to 10, characterized in that a computer (57) is provided for processing the measured results.

## Revendications

1. Procédé pour mesurer une pression avec un quartz à diapason fonctionnant sous une fréquence de résonance, procédé selon lequel la pression (p) d'un volume à mesurer est déterminée en mesurant une valeur d'amortissement correspondant à l'amortissement des oscillations du quartz, caractérisé en ce que ladite valeur d'amortissement est combinée à une valeur corrective proportionnelle à la fréquence de résonance respective ($f_R$).

2. Procédé selon la revendication 1, caractérisé en ce que la valeur d'amortissement est combinée à la valeur corrective de telle sorte que la valeur mesurée de la pression est déterminée essentiellement indépendamment des variations de la masse du quartz à diapason.

3. Procédé selon l'une des revendications précédentes, caractérisé en ce que la détermination de la valeur d'amortissement s'effectue au moyen de la mesure de la résistance en série ($R_S$) du quartz à diapason.

4. Procédé selon l'une des revendications précédentes, caractérisé par la détermination de la fréquence de résonance ($f_R$') d'un deuxième quartz à diapason (21) non relié au volume à mesurer et maintenu sous pression constante, l'allure de cette fréquence présentant essentiellement la même courbe de température que celle du premier quartz à diapason (11) et en ce que la valeur d'amortissement est combinée à une valeur proportionnelle à la différence respective entre les fréquences de résonance ($f_R$, $f_R$').

5. Procédé selon la revendication 4, caractérisé en ce que le deuxième quartz oscillant (21) est maintenu sous une pression constante qui se situe en dessous du seuil de réponse du manomètre à quartz à diapason.

6. Procédé selon la revendication 4 ou 5, caractérisé en ce que le deuxième quartz à diapason (21) est accordé de telle sorte que sa fréquence de résonance ($f_R$') est, toutes conditions égales, supérieure à la fréquence ($f_R$) du premier quartz à diapason (11).

7. Dispositif pour la mise en oeuvre du procédé pour mesurer une pression selon la revendication 1, comportant un quartz à diapason (11) relié manométriquement au volume à mesurer et un circuit électronique (3) destiné à saisir et à analyser un signal de sortie ($R_S$) dépendant de l'amortissement ainsi que de la fréquence de résonance respective ($f_R$) du quartz à diapason (11).

8. Dispositif selon la revendication 7, caractérisé en ce que le quartz à diapason (11) est disposé à l'intérieur d'un circuit de régulation (51) auto-oscillant.

9. Dispositif selon l'une des revendications 7 ou 8, caractérisé en ce que, à l'intérieur d'un espace fermé (22) sous pression constante est disposé un deuxième quartz à diapason (21), dont l'allure des fréquences est sensiblement aussi dépendante de la température que celle du premier quartz à diapason (11), et en ce que les deux quartz (11, 21) sont disposés de telle sorte qu'ils sont exposés à des températures sensiblement égales.

10. Dispositif selon la revendication 9, caractérisé en ce que le circuit d'oscillation du deuxième quartz à diapason (21) présente un condensateur (53) monté en série.

11. Dispositif selon l'une des revendications 7 à 10, caractérisé par la présence d'un ordinateur (57) pour le traitement des résultats des mesures.

$f_R$

FIG. 1

$p\,[Pa]$

$10^0 \quad 10^1 \quad 10^2 \quad 10^3 \quad 10^4 \quad 10^5$

$\log R_S$

FIG. 2

$p\,[Pa]$

$10^0 \quad 10^1 \quad 10^2 \quad 10^3 \quad 10^4 \quad 10^5$

FIG. 3

FIG. 4

FIG. 5

FIG. 6